# FASCICULE DE BREVET EUROPEEN

(11) **EP 3 250 859 B1**
(45) Date de publication et mention de la délivrance du brevet: **14.09.2022**
(21) Numéro de dépôt: 16705236.4
(22) Date de dépôt: 26.01.2016
(51) Int. Cl.: F23R 7/00, F02C 5/12, F23R 3/48

(54) **MODULE DE COMBUSTION A VOLUME CONSTANT POUR UNE TURBOMACHINE COMPORTANT UN ALLUMAGE PAR COMMUNICATION**
VERBRENNUNGSMODUL MIT KONSTANTEM VOLUMEN FÜR EINEN TURBINENMOTOR MIT KOMMUNIKATIONSBASIERTER ZÜNDUNG
CONSTANT-VOLUME COMBUSTION MODULE FOR A TURBINE ENGINE, COMPRISING COMMUNICATION-BASED IGNITION

(30) Priorité: 26.01.2015 FR 1550587
(43) Date de publication de la demande: 06.12.2017
(73) Titulaire: SAFRAN, 75015 Paris (FR)
(72) Inventeur: LEYKO, Matthieu, 77550 Moissy-Cramayel (FR)
(74) Mandataire: Gevers & Orès
(86) Numéro de dépôt international: PCT/FR2016/050151
(87) Numéro de publication internationale: WO 2016/120555

(56) Documents cités:
- US-A1- 2004 154 306
- US-A1- 2004 216 464
- US-A1- 2005 183 413

## Description

L'invention se rapporte au domaine des chambres de combustion de turbomachines d'aéronef, du type à combustion à volume constant.

L'invention s'applique à tout type de turbomachine, en particulier aux turboréacteurs, turbopropulseurs, et turbomachines à soufflantes non carénées, aussi connues sous le vocable anglo-saxon de « Open Rotor ».

### ETAT DE LA TECHNIQUE ANTERIEURE

Une turbomachine d'aéronef conventionnelle comporte de manière connue une ou plusieurs chambres de combustion. Une telle chambre de combustion est alimentée en air sous pression par un module de compresseur et il comporte un injecteur de carburant qui est apte à injecter du carburant dans le flux d'air admis pour le brûler et provoquer ainsi l'émission de gaz chauds qui sont utilisés d'une part pour entraîner une turbine, qui entraîne le module de compresseur et peut également entraîner une soufflante de la turbomachine, et d'autre part qui sont utilisés pour être éjectés à grande vitesse hors de la turbomachine afin de propulseur l'aéronef qui est équipé de ladite turbomachine par réaction.

Dans une telle chambre, le débit de carburant est continu et la combustion fonctionne selon un cycle dit de Brayton, c'est-à-dire selon un cycle de combustion à pression constante. Néanmoins, pour obtenir des gains de consommation spécifique, il a été envisagé de remplacer la chambre de combustion fonctionnant selon un cycle de Brayton par une pluralité de chambres de combustion fonctionnant selon un cycle de Humphrey, c'est-à-dire selon un cycle de combustion à volume constant ou « CVC ». Une telle chambre de combustion, connue de l'état de la technique, est par exemple divulguée dans le document US-2005/183.413-A1.

Le document WO-2014/020275-A1 divulgue une chambre de combustion CVC comportant des vannes sphériques comportant des rotors sphériques montés rotatifs autour d'axes perpendiculaires à l'axe de la chambre et combinés avec des enveloppes sphériques de ces rotors, lesdits rotors et lesdites enveloppes comportant des canaux et des lumières aptes à être alignés les uns avec les autres et avec des canaux d'entrée de sortie de la chambre de combustion pour déterminer sélectivement l'ouverture ou la fermeture des vannes d'admission et d'échappement correspondantes. Chaque chambre comporte une vanne sphérique à chacune de ses extrémités, et lesdites vannes sont synchronisées l'une avec l'autre afin de mettre en œuvre les trois phases successives du cycle de Humphrey.

Dans cette solution, la conception des vannes d'admission et d'échappement présente des inconvénients. En premier lieu, les mouvements des rotors sphériques dans les enveloppes provoquent de nombreux frottements, préjudiciables à la longévité de telles vannes. En deuxième lieu, les vannes sont délicates à fabriquer, du fait de la forme sphérique de leurs éléments. En troisième lieu, dans cette conception, les vannes demeurent indépendantes et doivent être synchronisées, et de ce fait la complexité de la chambre de combustion n'est pas optimale. En quatrième et dernier lieu, chaque chambre nécessite une vanne d'admission et une vanne d'échappement qui lui sont propres, de sorte qu'une turbomachine comportant plusieurs chambres comporte autant de vannes d'admission et de vannes d'échappement que de chambres.

### EXPOSÉ DE L'INVENTION

Une chambre de combustion fonctionnant selon le cycle de Humphrey comprend un port d'admission de gaz comprimé comportant une vanne d'admission agencée à l'entrée de la chambre et un port d'échappement de gaz brûlés comportant une vanne d'échappement agencée en sortie de la chambre de combustion. Ces vannes sont capables d'osciller chacune entre une position ouverte et une position fermée et sont pilotées de manière synchronisée afin de mettre en œuvre les trois phases successives du cycle de Humphrey, à savoir admission/balayage - combustion - échappement.

Dans un tel moteur, il est souhaitable que les cycles des chambres soient décalés les uns par rapport aux autres de manière inversement proportionnelle au nombre de chambres. Ceci permet, en générant une succession de phases d'échappement, de lisser le flux des gaz d'échappement fournis au module de turbine, et par conséquent de lisser les phénomènes de pulsation inhérents aux cycles de combustion à volume constant. En effet, si toutes les chambres fonctionnaient simultanément suivant les mêmes temps du cycle de Humphrey, les phases d'échappement seraient toutes simultanées et il en résulterait un débit de gaz d'échappement irrégulier, car soumis à la pulsation simultanée des gaz provenant des chambres. Un tel débit serait préjudiciable à la longévité du module de turbine. Au contraire, un module de combustion comportant des cycles de chambres décalés permet de lisser ces pulsations. L'admission en gaz d'échappement du module de turbine est du reste d'autant plus homogène et exempte de pulsations que le nombre de chambres est élevé.

Ainsi, de préférence, un module de combustion comportant un nombre déterminé de chambres voit-il de préférence, entre deux chambres consécutives, les cycles de ses chambres décalés d'une fraction du nombre de chambres déterminé.

Selon l'état actuel de la technique, la combustion dans ce type de chambre de combustion est déclenchée de manière conventionnelle à chaque phase de combustion par une bougie d'allumage logée dans chaque chambre. Une telle conception, dans le cadre d'un moteur comportant plusieurs chambres, implique une gestion des temps d'allumages particulièrement rigoureuse, et la mise en place sur l'ensemble du moteur d'un circuit d'allumage complexe qui est préjudiciable à l'accessibilité du moteur.

Il est connu du document US-2004/216.464-A1 d'agencer entre les sorties de deux chambres de ce type des conduits de couplage et permettant d'opposer une contre-pression à l'échappement afin de permettant de favoriser l'augmentation de la densité molaire du mélange et ce faisant le rendement énergétique de chaque chambre. Toutefois ces conduits de couplage ne sont utilisés qu'à cet effet.

Il est également connu du document US-2004/154.306-A1 d'agencer entre les entrées de deux chambres de ce type des conduits de couplage permettant de transférer d'une première chambre à une deuxième chambre des gaz de combustion brûlés ou gaz de «compoundage », destinés à augmenter le taux de compression dans la deuxième chambre préalablement à l'injection de carburant dans cette chambre. Toutefois, ces conduits de couplage ne sont utilisés que dans le but d'améliorer le rendement de la combustion et ne participent pas à l'allumage du mélange carburé.

Or, une solution pour déclencher l'allumage d'une chambre à volume constant en l'absence de bougie est d'y injecter des gaz brûlés chauds, la température élevée de ces gaz suffisant à déclencher la combustion.

L'invention propose un module de combustion mettant en œuvre cette solution pour déclencher l'allumage successivement dans les chambres de combustion.

Dans ce but, l'invention propose un module de combustion de turbomachine selon la revendication 1.

Selon d'autres caractéristiques du module de combustion :
- le tronçon de gorge est formé dans la périphérie de l'élément tubulaire de la vanne rotative d'échappement,
- le module comporte un élément rotatif commun qui comporte les vannes rotatives d'admission / d'échappement liées mutuellement à rotation.

L'invention concerne aussi une turbomachine comportant un module de compresseur comportant au moins un compresseur, un module de combustion du type décrit précédemment, et un module de turbine comportant au moins une turbine, le module de compresseur étant lié au module de turbine par un système d'arbres. Conformément à l'invention, cette turbomachine est caractérisée en ce que le module de compresseur alimente le module de combustion par l'intermédiaire d'un conduit d'admission unique, et en ce que le module de combustion alimente le module de turbine par l'intermédiaire d'un conduit d'échappement unique.

Selon une autre caractéristique de la turbomachine, au moins un arbre du système d'arbres forme le moyen d'entraînement de l'élément rotatif commun liant les vannes rotatives d'admission et d'échappement mutuellement à rotation.

L'invention concerne enfin un procédé de commande d'un module de combustion d'une turbomachine du type décrit précédemment, comportant au moins une étape d'allumage successif d'au moins une première et une seconde chambres de combustion qui fonctionnent chacune successivement selon un cycle comportant :
- une première phase au cours de laquelle les ports d'admission et d'échappement sont fermés, comportant une première sous-phase de confinement d'un mélange carburé frais puis une seconde sous-phase de combustion dudit mélange carburé dans chaque chambre correspondante,
- une deuxième phase au cours de laquelle le port d'admission est fermé et le port d'échappement est ouvert, pour provoquer l'échappement des gaz brûlés de chaque chambre correspondante, puis
- une troisième phase au cours de laquelle les ports d'admission et d'admission et d'échappement sont ouverts, pour provoquer le balayage des gaz brûlés avec des gaz frais au travers de chaque chambre correspondante,
dans lequel, au cours de l'étape d'allumage successif, on déphase l'admission et l'échappement des première chambre et seconde chambre de manière que la première chambre puisse être soumise à la seconde sous-phase lorsque la seconde chambre est soumise à la première sous-phase, et en ce que l'étape d'allumage successif comporte une sous-étape de commande, intervenant lorsque la première chambre est soumise à la seconde sous-phase, au cours de laquelle on met en communication la première chambre et la seconde chambre pour déclencher la combustion dans la seconde chambre.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue en perspective coupée par un plan axial illustrant le principe d'un module de combustion à volume constant ;
- la figure 2 est une vue schématique en coupe axiale du module de combustion de la figure 1 ;
- la figure 3 est une vue schématique en coupe transversale du module de combustion de la figure 2 ;
- la figure 4 est une vue en perspective d'un module de combustion à trois chambres de combustion ;
- la figure 5 est une vue schématique en coupe transversale du module de combustion de la figure 4 ;
- la figure 6 est une vue en perspective avec arrachement d'une turbomachine comportant une pluralité de modules de combustion à volume constant ;
- la figure 7 est une vue en perspective d'un module de combustion à trois chambres de combustion ;
- la figure 8 est une vue schématique en coupe transversale du module de combustion de la figure 6 ;
- la figure 9 est une vue schématique d'un circuit d'allumage du module de combustion des figures 7 et 8 ;
- la figure 10 est une vue schématique d'une première variante d'un circuit d'allumage pour le module de combustion des figures 7 et 8 ;
- la figure 11 est une vue schématique d'une deuxième variante d'un circuit d'allumage pour le module de combustion des figures 7 et 8 ;
- la figure 12 est une vue en perspective d'un élément rotatif pour un circuit d'allumage d'un module de combustion selon les figures 4 à 6 ;
- les figures 13A, 14A et 15A sont des vues schématiques représentant trois positions successives d'un module de combustion comportant un élément rotatif conforme à la figure 11, en coupe transversale dans le plan axial de sa vanne d'admission ; et
- les figures 13B, 14B et 15B sont des vues schématiques représentant trois positions successives d'un module de combustion comportant un élément rotatif conforme à la figure 11 en coupe dans le plan axial de sa vanne d'échappement.

Dans la description qui va suivre, des chiffres de référence identiques désignent des pièces identiques ou ayant des fonctions similaires.

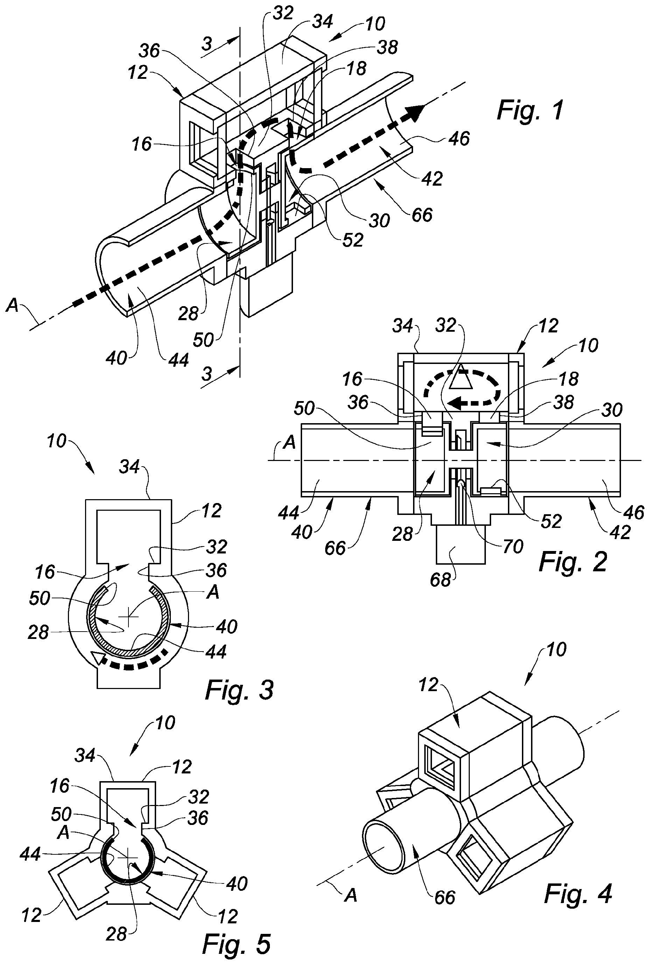

On a représenté aux figures 1 à 3 le principe d'un module de combustion 10 configuré pour mettre en œuvre une combustion à volume constant se déroulant selon le cycle de Humphrey, c'est-à-dire comportant une phase de combustion, une phase d'échappement, et une phase d'admission d'air frais et de balayage des gaz brûlés. Les figures 1 à 3 illustrent le principe d'un module de combustion 10 comportant une chambre 12 de combustion agencée autour d'un axe "A", qui correspond par exemple à un axe de rotation d'une turbomachine. Les figures 1 à 3 ont été simplifiées à une seule chambre 12, pour la compréhension du fonctionnement d'une telle chambre 12. Toutefois, l'invention concerne un module comportant au moins deux chambres 12 de combustion, c'est-à-dire par exemple un module du type de celui qui a été représenté aux figures 4 et 5, qui comporte trois chambres de combustion.

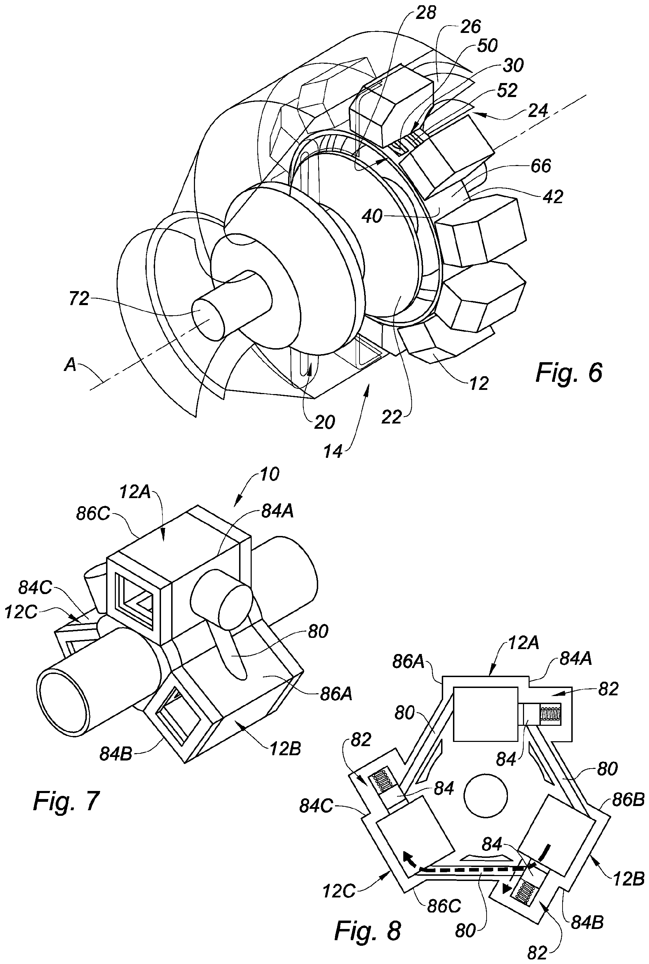

Le module de combustion 10 peut comporter un nombre supérieur de chambres 10, comme l'illustre la figure 6, qui représente une turbomachine 14 comportant dix chambres 12 de combustion agencées autour de l'axe "A".

Comme l'illustrent les figures 1 et 2, chaque chambre 12 comprend un port 16 d'admission de gaz comprimé et un port 18 d'échappement des gaz brûlés. Dans une turbomachine du type de celle qui a été représentée à la figure 6, le port 16 d'admission de gaz comprimé est alimenté par un module de compresseur 20 de la turbomachine 14 comprenant au moins un compresseur 22, et le port 18 d'échappement de gaz alimente au moins un module de turbine 24 comprenant au moins une turbine 26.

L'invention est décrite en référence à des modes de réalisation préférés du module 10 de combustion, mais il sera compris que cette configuration n'est pas limitative de l'invention.

De préférence, chaque port d'admission 16 ou port d'échappement 18 est configuré pour être ouvert ou fermé par une vanne rotative d'admission 28 ou par une vanne d'échappement 30 correspondante, coaxiale à l'axe A de la turbomachine 14.

Le module 10 de combustion qui a été représenté aux figures 1 à 3 ne comporte qu'une chambre 12 de combustion. Dans cette configuration, l'allumage de la chambre 12 de combustion est nécessairement réalisé par un moyen d'allumage, par exemple une bougie d'allumage, qui est associé spécifiquement à la chambre 12.

Dans le but d'homogénéiser les gaz d'échappement fournis au module 24 de turbine de la turbomachine, on propose un module 10 comportant plusieurs chambres 12 de combustion. Ainsi, il est préférable de disposer d'un module 10 comporte au moins deux chambres 12 de combustion réparties angulairement de manière régulière autour de l'axe A, dont les ports d'admission 16 sont configurés pour être ouverts ou fermés par une vanne rotative commune d'admission 28 et dont les ports d'échappement 18 sont configurés pour être ouverts ou fermés par une vanne rotative commune d'échappement 30. La vanne d'admission 28 et la vanne d'échappement 30 peuvent tourner ensemble ou peuvent tourner être des pièces pouvant tourner différemment.

La figure 5 illustre un module 10 de combustion 10 de ce type, comportant une vanne rotative 28 commune d'admission qui alimente les trois ports d'admission 16 de trois chambres 12 de combustion d'un même module 10.

De même, à la figure 6, on a représenté une turbomachine dont le module 10 comporte une vanne rotative 28 commune d'admission qui alimente les ports d'admission de dix chambres 12 de combustion d'un même module 10 et une vanne rotative 30 d'échappement qui est alimentée par les dix ports d'échappement des dix chambres 12 de combustion dudit module 10.

Cette configuration est particulièrement avantageuse, car elle permet d'alimenter plusieurs chambres 12 avec une seule vanne d'admission 28 et d'en évacuer les gaz avec une seule vanne d'échappement 30, ce qui permet de simplifier considérablement l'architecture d'une turbomachine 14 comportant un tel module de combustion 10 par rapport aux conceptions précédemment connues de l'état de la technique.

Les chambres 12 de combustion sont réparties angulairement de manière régulière autour de l'axe A, et elles présentent chacune une direction orientée de préférence suivant une direction sensiblement axiale parallèle à l'axe A, de manière à former une structure en forme de barillet. Toutefois, cette configuration n'est pas limitative, et les chambres pourraient être agencées selon une autre orientation du moment qu'elle sont disposées de manière rayonnante autour de l'axe A pour pouvoir être alimentées en air comprimé de manière commune par une vanne d'admission 28 commune et pour évacuer les gaz brulés de manière commune par une vanne d'échappement 30 commune.

De préférence également, les cycles de combustion des chambres 12 sont décalés suivant un décalage dépendant du nombre de chambres 12. Ceci permet de lisser le flux des gaz d'échappement fournis au module de turbine 24, en lissant les phénomènes de pulsation inhérents aux cycles de combustion à volume constant. En effet, si toutes les chambres 12 fonctionnaient simultanément suivant les mêmes temps du cycle de Humphrey, les phases d'échappement seraient toutes simultanées et il en résulterait un débit de gaz d'échappement irrégulier, car soumis à la pulsation simultanée des gaz provenant des chambres 12. Un tel débit risquerait d'endommager le module de turbine 24. Au contraire, un module de combustion 10 fonctionnant selon des cycles de chambres 12 décalés permet de lisser ces pulsations. On remarquera que l'admission en gaz d'échappement du module de turbine 24 est d'autant plus homogène et exempte de pulsations que le nombre de chambres 12 sera élevé.

Ainsi, de préférence, un module de combustion comportant un nombre déterminé "n" de chambres 12 verra-t-il les cycles de ses chambres décalés Pour un nombre de "n" chambres, on sera amené à faire fonctionner un nombre de chambres inférieur à la moitié "n/2" du nombre "n" de chambres en même temps pour équilibrer les charges sur les vannes rotatives. En particulier, deux chambres opposées seront sur une même phase de cycle en considérant par exemple pour quatre chambres à un instant déterminé deux chambres en combustion et deux chambres sans combustion.

Dans le mode de réalisation considéré, les vannes rotatives d'admission 28 et d'échappement 30 sont synchronisées en rotation l'une à l'autre, en tournant à la même vitesse de rotation. Cette synchronisation peut d'une manière générale être réalisée par tout moyen connu de l'état de la technique, notamment de manière mécanique.

La multiplication du nombre de chambres 12 de combustion soulève le problème des moyens d'allumage destinés à provoquer la combustion dans ces chambres 12.

Dans une telle architecture comportant plusieurs chambres 12, il est bien entendu possible de reproduire la configuration qui a été évoquée à la figure 1, selon laquelle chaque chambre 12 comporte un moyen d'allumage indépendant. Toutefois, cette configuration est peu appropriée car elle nécessite une gestion synchronisée des temps d'allumage. Par ailleurs, cette configuration augmente d'autant plus la complexité du module de combustion 10 que celui-ci comporte plus de chambres 12.

Or, il est possible de provoquer l'allumage d'un mélange carburé d'une chambre de combustion non pas au moyen d'une bougie d'allumage, mais par injections de gaz chauds, tels que par exemple des gaz à une température proche de celle d'une combustion.

Aussi, comme l'illustrent les figures 6 à 11, on peut imaginer un module de combustion 10 du type décrit précédemment, comportant au moins un conduit 80 apte à mettre en communication une première chambre de combustion 12A avec au moins une seconde chambre de combustion 12B pour injecter des gaz brûlés issus de la première chambre de combustion 12A dans ladite seconde chambre 12B de combustion afin de déclencher une combustion dans ladite seconde chambre 12B de combustion. Ce module de combustion ne fait pas l'objet de l'invention.

Ainsi, il sera compris que ce module de combustion 10 comporte au moins un conduit 80 apte à mettre en communication deux chambres de combustion 12A, 12B dont les cycles de combustion sont décalés. A cet effet l'ensemble des étapes d'admission/balayage - combustion - échappement des chambres 12A, 12B sont décalés. Ce décalage implique non seulement l'injection des gaz brûlés issus de la première chambre de combustion 12A dans ladite seconde chambre 12B de combustion afin de déclencher une combustion dans ladite seconde chambre 12B de combustion, mais également que l'admission et l'échappement des gaz des deux chambres 12A 12B, par les vannes d'admission 28 et d'échappement 30 se produisent de manière décalée, afin que l'injection de gaz brûlés issus de la première chambre 12A survienne dans la chambre 12B remplie de mélange carburé frais.

Par ailleurs, plus généralement, cette configuration est généralisée à toutes les chambres de combustion du module de combustion 10, les injections de gaz brûlés étant effectués d'une chambre à une chambre successive dans l'ordre d'allumage des chambres.

Dans la suite de la présente description, on décrira le fonctionnement d'un module de combustion 10 comportant au moins un groupe de trois chambres 12A, 12B, et 12C destinées à faire l'objet de combustions successives, étant entendu que le module de combustion 10 peut comporter un nombre supérieur de chambres 12.

Le module 10 comporte un obturateur 30, 82 qui constitue un moyen d'ouverture/fermeture du conduit 80 apte à autoriser sélectivement le passage des gaz brûlés de la première chambre 12A de combustion, vers ladite seconde chambre de combustion 12B.

Comme il a été représenté aux figures 6 et 7, chaque conduit 80 est un conduit fixe qui relie une paroi 84A, 84B, 84C à une paroi 86A, 86B, 86C de deux chambres successives parmi les chambres 12A, 12B, 12C et qui est susceptible d'être ouvert ou fermé par un obturateur 82.

L'obturateur 82 constituant le moyen d'ouverture de chaque conduit 80 peut prendre toute forme connue de l'état de la technique. Par exemple, l'obturateur 82 pourrait comporter une électrovanne. Toutefois, par souci de simplification, l'obturateur 82 peut aussi comporter au moins un moyen de soupape 84 taré en pression, qui est situé dans le conduit 80, et qui est apte à s'ouvrir dès lors que la pression des gaz brûlés dans la première chambre 12A, 12B, 12C dépasse un seuil déterminé. Dès lors que ce seuil est franchi, le moyen de soupape 84 s'ouvre, et permet l'alimentation de la chambre suivante. Ainsi, la chambre 12A alimente en gaz brulés la chambre 12B, qui alimente ensuite en gaz brulés la chambre 12C, qui alimente ensuite en gaz brulés la chambre 12A, puis ce cycle se répète.

Cette configuration est particulièrement adaptée à un module 10 comportant au moins un groupe de chambres de combustion 12A, 12B, 12C agencées angulairement de manière régulière autour de l'axe A, la séquence d'allumage pouvant être répétée de manière cyclique. Chaque groupe de chambres 12A, 12B, 12C comporte au moins un circuit d'allumage propre 90, constitué des conduits 80 et des obturateurs 82, lesdits conduits de communication 80 étant chacun agencés entre deux chambres du même groupe de chambres 12A, 12B, 12C.

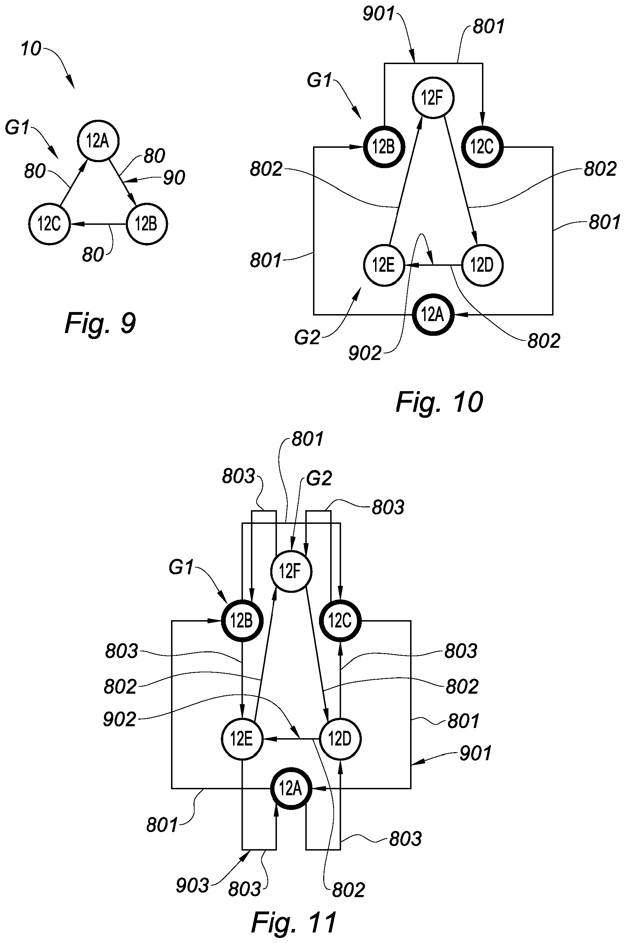

La figure 8 et la figure 9 illustrent de manière schématique la plus simple des configurations de ce type de système d'allumage.

Dans cette configuration, le module 10 comporte un unique groupe G1 de chambres 12A, 12B, 12C de combustion agencées angulairement de manière régulière de l'axe, qui comporte son circuit d'allumage propre 90 qui comporte ses conduits 80 de communication qui sont chacun agencés entre les chambres successives 12A, 12B, 12C dudit groupe suivant le sens d'allumage qui a été représenté par les flèches de la figure 8. Les conduits 80 sont aptes à injecter des gaz brûlés d'une première des deux chambres 12A, 12B, 12C dans la seconde des deux chambres 12B, 12C, 12A successive, afin de déclencher une combustion dans ladite seconde chambre 12B, 12C, 12A de combustion.

Cette configuration suppose, pour fonctionner correctement de manière continue, que la combustion est initiée correctement dans chaque chambre 12A, 12B, 12C par une injection de gaz brulés provenant de la chambre précédente 12C, 12A, 12B dans l'ordre d'allumage. Toutefois, si une combustion n'est pas déclenchée, le cycle est alors interrompu et il doit être redémarré par un moyen d'allumage conventionnel tel qu'une bougie.

La figure 10 illustre une première variante de cette configuration selon laquelle le module comporte deux groupes G1 et G2 de chambres de combustion 12A, 12B, 12C et 12D, 12E, 12F respectivement agencées angulairement de manière régulière autour de l'axe A, chaque groupe G1 et G2 comportant au moins un circuit d'allumage propre 901 et 902 respectif qui comporte des conduits 801 et 802 de communication qui sont chacun agencés entre deux chambres dudit groupe G1 et G2 et qui sont aptes à injecter des gaz brûlés d'une première des deux chambres du même groupe G1 ou G2 dans la seconde des deux chambres du même groupe G1 ou G2.

De la sorte, si l'un des groupes G1 ou G2 vient à s'éteindre, l'autre groupe continue de fonctionner, ce qui permet d'éviter l'arrêt, ou à tout le moins un fonctionnement dégradé, de la turbomachine associée. Il est possible de prévoir un moyen d'allumage conventionnel tel qu'une bougie sur une des chambres de chaque groupe G1 ou G2, afin de pouvoir redémarrer un groupe G1 ou G2 en cas d'extinction.

Sur la figure 10, le module de combustion 10 qui a été représentée comporte deux groupes G1 et G2, mais il sera compris que le module 10 de combustion pourrait comporte un nombre supérieur de groupes.

On remarquera que les groupes de chambres 12A, 12B, 12C et 12D, 12E, 12F peuvent être décalés angulairement, comme représenté schématiquement à la figure 9, mais il sera compris qu'ils pourraient aussi être décalés axialement selon l'axe A.

La figure 11 illustre une seconde variante du module 10 de combustion selon laquelle le module 10 comporte similairement au cas précédent deux groupes G1 et G2 de chambres de combustion 12A, 12B, 12C et 12D, 12E, 12F respectivement agencées angulairement de manière régulière autour de l'axe A, chaque groupe G1 et G2 comportant au moins un circuit d'allumage propre 901 et 902 respectif qui comporte des conduits 801 et 802 de communication qui sont chacun agencés entre deux chambres dudit groupe G1 et G2 et qui sont aptes à injecter des gaz brûlés d'une première des deux chambres du même groupe G1 ou G2 dans la seconde des deux chambres du même groupe G1 ou G2. Le module 10 comporte au moins un circuit d'allumage supplémentaire 903, qui est interposé entre deux groupes G1 et G2 et qui comporte des conduits de communication supplémentaires 803 qui sont chacun agencés entre une première chambre 12A, 12B, 12C d'un groupe G1 et une seconde chambre 12D, 12E, 12F de l'autre groupe G2 et qui sont aptes à injecter des gaz brûlés de la première chambre 12A, 12B, 12C du premier groupe G1 dans la seconde chambre 12D, 12E, 12F du second groupe G2 afin de déclencher une combustion dans ladite seconde chambre de combustion 12D, 12E, 12F dudit second groupe G2, afin de maintenir l'allumage des chambres des deux groupes G1 et G2 en cas de défaillance d'un circuit d'allumage propre.

Il sera compris que de préférence, cette configuration est réciproque, et que chaque chambre peut permettre d'allumer deux chambres et de se faire allumer par deux autres chambres. Ainsi, chaque chambre 12A, 12B, 12C allume une chambre 12B, 12C, 12A du même groupe G1 et une chambre 12D, 12E, 12F de l'autre groupe G2 tandis que réciproquement chaque chambre 12D, 12E, 12F allume une chambre 12E, 12F, 12D du même groupe G2 et une chambre 12A, 12B, 12C de l'autre groupe G2.

Dans cette configuration, les risques d'extinction sont réduits. La probabilité d'extinction dans sa totalité d'un module de combustion comportant N groupes est p^{N}, p étant la probabilité d'extinction d'une chambre.

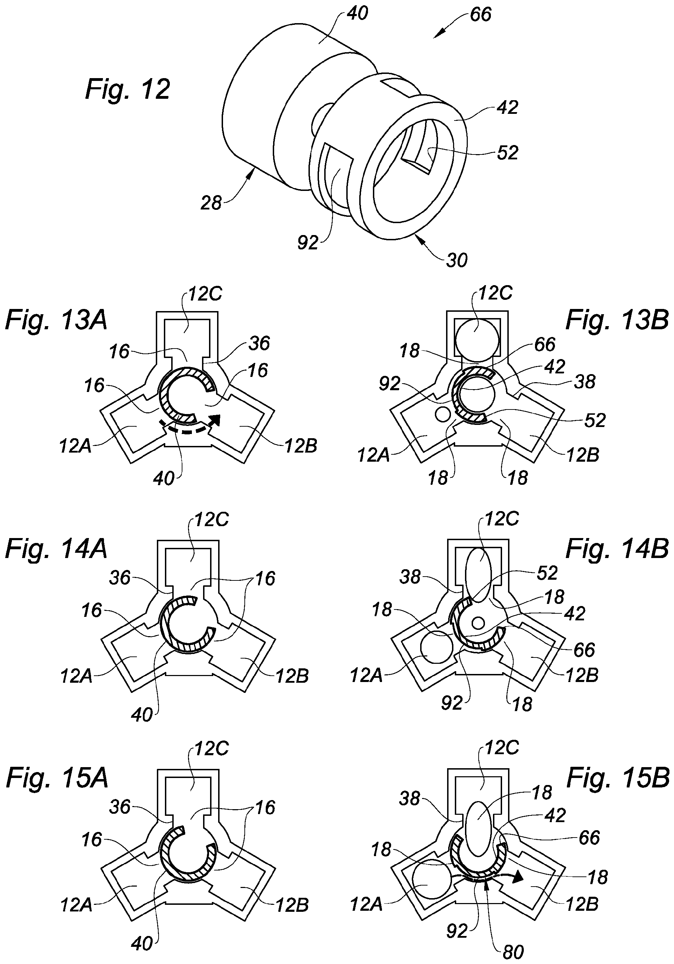

Dans un même esprit, selon l'invention qui a été représentée aux figures 12 à 15B, il est possible de tirer parti d'une configuration particulière des vannes d'admission 28 et d'échappement 30 pour obtenir le conduit 80.

La figure 1 illustre le principe d'un module 10 de combustion comportant de telles vannes d'admission 28 et d'échappement 30.

De manière préférentielle de l'invention, chaque chambre 12 de combustion comporte au moins une paroi 32, 34 en tronçon de cylindre tournée vers l'axe A. Les chambres 12 comportent au moins une première paroi longitudinale 32 en tronçon de cylindre, tournée vers l'axe A, c'est-à-dire une paroi 32 intérieure, qui comporte les deux ports d'admission 16 et d'échappement 18, et accessoirement une deuxième paroi longitudinale 34, tournée à l'opposé de l'axe A, c'est-à-dire une paroi 34 extérieure, qui est dépourvue de ports d'admission ou d'échappement.

Chaque port 16, 18 comporte une ouverture radiale 36, 38 qui est formée dans la paroi 32 intérieure en tronçon de cylindre de la chambre de combustion coaxiale à l'axe A. Chaque vanne rotative d'admission 28 / d'échappement 30 comporte un élément tubulaire 40, 42 correspondant, de diamètre correspondant audit tronçon de cylindre, et monté tournant intérieurement audit tronçon de cylindre. Cet élément tubulaire 40 ,42 constitue, à l'opposé à la chambre de combustion 12, un conduit 44, 46 de gaz d'admission / d'échappement formé dans un alésage interne de l'élément tubulaire 40, 42, et il comporte au moins une lumière radiale 50, 52, agencée sensiblement dans un plan axial de l'ouverture radiale 36, 38 dudit port 16, 18, qui est apte obturer ou libérer ladite ouverture radiale 36, 38 lors de la rotation dudit élément tubulaire 40, 42.

L'acheminement des gaz d'admission et l'évacuation des gaz d'échappement ont été représentés par la flèche de la figure 1.

Les éléments tubulaires 40, 42 sont synchronisés en rotation de manière très simple. Avantageusement, le module de combustion 10 comporte un élément rotatif commun 66 qui comporte les vannes rotatives d'admission 28 et d'échappement 30 et qui est mû par exemple par un unique moyen d'entraînement. Cette configuration permet donc de réaliser de manière très simple la synchronisation des vannes d'admission 28 et d'échappement 30. Des moyens d'entraînement distincts peuvent être prévus, par exemple en étant synchronisés entre eux.

L'entraînement de cet élément rotatif 66 peut être réalisé de différentes manières. Par exemple, l'élément rotatif 66 peut être entraîné par un moteur 68, et par un accouplement par engrenage à renvoi d'angle 70, comme représenté à la figure 1, mais plus simplement, l'élément rotatif 66 peut être accouplé à un système d'arbres de la turbomachine associée par l'intermédiaire d'une réduction appropriée. Un tel système d'arbres 72, reliant le module 20 de compresseur au module 24 de turbine, a été représenté à titre d'exemple à la figure 6.

On remarquera que cette configuration permet une alimentation simplifiée en gaz d'admission du module 10 de combustion et un échappement lui aussi simplifié des gaz brulés dans ledit module 10 de combustion. Le module de compresseur 22 alimente en gaz d'admission le module 10 de combustion par l'intermédiaire d'un conduit d'admission unique débouchant dans l'alésage 44 de l'élément rotatif 66 et le module de combustion 10 alimente le module de turbine 24 en gaz d'échappement par l'intermédiaire d'un conduit d'échappement unique alimenté par l'alésage 46 de l'élément rotatif 66.

Sur ce principe, l'invention propose de réaliser le conduit directement dans l'élément rotatif 66.

A cet effet, au moins une des vannes rotatives 28, 30 comporte sur sa périphérie un tronçon de gorge 92 qui s'étend sur un secteur angulaire déterminé de la périphérie de la vanne rotative 28, 30 pour déterminer un conduit de fuite qui est destiné à mettre en communication une première des chambres de combustion 12A et une seconde des chambres de combustion 12B voisine de ladite première chambre, dans une position de ladite vanne rotative correspondant à une fin de combustion dans la première chambre 12A préalablement à une évacuation des gaz brûlés et une fin de remplissage de la seconde chambre 12B préalablement à la combustion.

La figure 12 représente ainsi le tronçon 92 de gorge qui a été formé sur un secteur angulaire de la vanne 30 d'échappement, ledit secteur angulaire étant agencé à la périphérie de l'élément tubulaire 42 dans le même plan axial que la lumière d'échappement 52.

Dans ce cas, c'est donc la vanne 30 de l'élément rotatif 66 qui forme elle-même l'obturateur en fonction de sa position angulaire relativement aux chambres 12A, 12B, 12C.

Il sera compris que cette disposition n'est pas limitative de l'invention et que le tronçon de gorge 92 pourrait être formé dans la périphérie de l'élément tubulaire 40 de la vanne 28 d'admission.

Le tronçon de gorge 92 est d'une ouverture angulaire supérieure à l'écart entre les ouvertures radiales 38 des deux chambres 12A, 12B. Par exemple, sur les figures 13A à 15B, l'écart angulaire entre deux chambres successives 12A, 12B est de 60°, et il sera compris que le tronçon de gorge est d'une ouverture supérieure à 60°.

Le tronçon de gorge 92 peut être partiellement couvert pour protéger la cavité dans laquelle est logé l'élément rotatif 66. Cela permet par exemple d'éviter de dégrader le système d'étanchéité de l'élément rotatif 66, constitué par exemple par des matériaux abradables lors de la circulation du gaz chaud dans la gorge 92.

De la sorte, le tronçon de gorge 92 constitue certaines des parois de délimitation du conduit 80 entre les deux chambres 12A, 12B uniquement selon certaines positions angulaires de l'élément rotatif 66.

Comme l'illustrent les figures 13A à 15B, chaque chambre 12A, 12B, 12C de combustion fonctionne selon un cycle comportant une première phase au cours de laquelle les ports d'admission 16 et d'échappement 18 sont fermés. Cette première phase comporte une première sous-phase de confinement d'un mélange carburé frais puis une seconde sous-phase de combustion dudit mélange carburé. Puis, le cycle comporte une deuxième phase au cours de laquelle le port d'admission 16 est fermé et le port d'échappement 18 est ouvert, pour provoquer l'échappement des gaz brûlés. Puis le cycle comporte une troisième phase au cours de laquelle les ports d'admission 16 et d'admission 18 et d'échappement sont ouverts, pour assurer le balayage des gaz brûlés avec des gaz frais.

La position angulaire relative des lumières radiales 50, 52 de l'élément détermine l'exécution du procédé selon lequel l'admission et l'échappement des première chambre 12A et seconde chambre 12B, et des chambres suivantes dans l'ordre d'allumage, sont déphasés de manière que la première chambre 12A puisse être soumise à la seconde sous-phase lorsque la seconde chambre 12B est soumise à la première sous-phase.

Par ailleurs, la position angulaire du tronçon de gorge 92 détermine une sous-étape de commande, intervenant lorsque la première chambre est soumise à la seconde sous-phase, au cours de laquelle on met en communication la première chambre 12A et la seconde chambre 12B pour déclencher la combustion dans la seconde chambre 12B. Dans ce cas le tronçon de gorge 92 détermine dans cette position angulaire de l'élément tubulaire 42 un conduit de fuite 80 entre les chambres 12A et 12B, qui permet d'acheminer une partie des gaz brulés de la chambre 12A vers la chambre 12B pour déclencher la combustion dans la chambre 12B.

Dans la position des figures 13A et 13B, la chambre 12C est en fin de la deuxième sous-phase de combustion, la chambre 12A en début de la deuxième sous-phase de combustion, et la chambre 12B est dans la troisième phase de balayage des gaz brûlés.

Dans la position des figures 14A et 14B, la chambre 12C est dans la deuxième phase d'échappement, la chambre 12A est dans la deuxième sous-phase de combustion, et la chambre 12B en fin de la troisième phase de balayage des gaz brûlés.

Dans la position des figures 15A et 15B, la chambre 12C est dans la troisième phase de balayage des gaz brulés, la chambre 12A est en fin de la deuxième sous-phase de combustion, et la chambre 12B est dans la première sous phase de combustion. Dans cette position, le tronçon de gorge 92 délimite un conduit de fuite 80 entre la chambre 12A et la chambre 12B. Les gaz brulants cheminent dans le conduit de fuite 80 et permettent d'enflammer le mélange dans la chambre 12B.

L'invention permet donc de réaliser de manière simple et fiable la commande d'allumage des chambres 12 d'un module 10 de combustion de type à volume constant à chambres de combustion rayonnantes.

## Revendications

1. Module (10) de combustion de turbomachine, notamment de turbomachine d'aéronef, configuré pour la mise en œuvre d'une combustion à volume constant, comportant au moins deux chambres de combustion (12A, 12B), chaque chambre (12A, 12B, 12C) comprenant un port d'admission (16) de gaz comprimé et un port d'échappement (18) de gaz brulés, et un moyen d'allumage déclenchant une combustion dans les chambres de combustion (12A, 12B, 12C),
les chambres (12A, 12B, 12C) étant agencées autour d'un axe (A), le module (10) comportant au moins un conduit (80) apte à mettre en communication une première des chambres de combustion (12A) avec au moins une seconde des chambres de combustion (12B) pour injecter des gaz brûlés issus de la première chambre de combustion (12A) dans ladite seconde chambre de combustion (12B) afin de déclencher une combustion dans ladite seconde chambre de combustion (12B),
le module comportant un obturateur 30, 82) pour l'ouverture / la fermeture du conduit (80) apte à autoriser sélectivement le passage des gaz brûlés de la première chambre de combustion (12A), vers ladite seconde chambre de combustion (12B), ledit module de combustion de turbomachine étant **caractérisé en ce qu'**il comporte en outre des vannes communes d'admission (28) / d'échappement (30) respectives synchronisées et montées rotatives autour dudit axe (A) pour ouvrir et fermer les ports d'admission (16) / d'échappement (18) des chambres (12A, 12B, 12C) de combustion, lesdites vannes (28, 30) coopérant avec une ouverture radiale (36, 38) qui est formée dans une paroi (32) conformée en tronçon de cylindre de la chambre (12) de combustion tournée vers l'axe (A), chaque vanne rotative d'admission (28) ou d'échappement (30) correspondante comportant un élément tubulaire (40, 42), de diamètre correspondant audit tronçon de cylindre monté tournant coaxialement audit tronçon de cylindre, ledit élément tubulaire (40, 42) comportant un alésage (44, 46) permettant l'acheminement des gaz d'admission / l'échappement, et au moins une lumière radiale (50, 52), agencée sensiblement dans un plan axial de l'ouverture radiale (36, 38) dudit port (16, 18), et qui est apte obturer ou libérer ladite ouverture radiale (36, 38) lors de la rotation dudit élément tubulaire (40, 42) et **en ce que** au moins une des vannes rotatives (30) comporte sur sa périphérie un tronçon de gorge (92) qui s'étend sur un secteur angulaire déterminé de la périphérie de la vanne rotative (30) pour former ledit conduit (80) destiné à mettre en communication une première des chambres de combustion (12A, 12B, 12C) et une seconde des chambres de combustion (12B, 12C, 12A) voisine de ladite première chambre (12A, 12B, 12C), dans une position angulaire de ladite vanne rotative (30) correspondant à une fin de combustion dans la première chambre (12A; 12B, 12C) préalablement à une évacuation des gaz brûlés et une fin de remplissage de la seconde chambre (12B, 12C, 12A) préalablement à la combustion, la vanne rotative (30) formant l'obturateur (30,82) en fonction de sa position angulaire

2. Module (10) de combustion selon la revendication précédente, **caractérisé en ce que** le tronçon de gorge (92) est formé dans la périphérie de l'élément tubulaire (42) de la vanne rotative d'échappement (30).

3. Module (10) de combustion selon la revendication 1 ou 2, **caractérisé en ce qu'**il comporte un élément rotatif commun (66) qui comporte les vannes rotatives d'admission (28) / d'échappement (30) liées mutuellement à rotation.

4. Turbomachine (10) comportant un module (20) de compresseur comportant au moins un compresseur (22), un module (10) de combustion selon l'une des revendications 1 à 3, et un module (24) de turbine comportant au moins une turbine (26), le module de compresseur (20) étant lié au module de turbine (24) par un système d'arbres (72), **caractérisée en ce que** le module de compresseur (20) alimente le module de combustion (10) par l'intermédiaire d'un conduit d'admission unique et **en ce que** le module (10) de combustion alimente le module de turbine (24) par l'intermédiaire d'un conduit d'échappement unique.

5. Turbomachine (10) selon la revendication précédente, le module de combustion étant tel que défini à la revendication 3, **caractérisée en ce qu'**au moins un arbre du système d'arbres (72) forme un moyen d'entraînement de l'élément rotatif commun (66) liant les vannes rotatives d'admission (28) / d'échappement (30) mutuellement à rotation.

6. Procédé de commande d'un module de combustion d'une turbomachine selon l'une des revendications 4 ou 5, comportant au moins une étape d'allumage successif d'au moins une première et une seconde chambres (12A, 12B) de combustion qui fonctionnent chacune successivement selon un cycle comportant :
- une première phase au cours de laquelle les ports d'admission (16) et d'échappement sont fermés, comportant une première sous-phase de confinement d'un mélange carburé frais puis une seconde sous-phase de combustion dudit mélange carburé dans chaque chambre (12A, 12B) correspondante,
- une deuxième phase au cours de laquelle le port d'admission (16) est fermé et le port d'échappement (18) est ouvert, pour provoquer l'échappement des gaz brûlés de chaque chambre (16, 18) correspondante, puis
- une troisième phase au cours de laquelle les ports d'admission (16, 18) et d'admission et d'échappement sont ouverts, pour provoquer le balayage des gaz brûlés avec des gaz frais au travers de chaque chambre (12A, 12B) correspondante,
dans lequel, au cours de l'étape d'allumage successif, on déphase l'admission et l'échappement des première chambre (12A) et seconde chambre (12B) de manière que la première chambre (12A) puisse être soumise à la seconde sous-phase lorsque la seconde chambre (12B) est soumise à la première sous-phase, et dans lequel l'étape d'allumage successif comporte une sous-étape de commande, intervenant lorsque la première chambre (12A) est soumise à la seconde sous-phase, au cours de laquelle on met en communication la première chambre (12A) et la seconde chambre (12B) pour déclencher la combustion dans la seconde chambre (12B).

## Patentansprüche

1. Verbrennungsmodul (10) einer Turbomaschine, insbesondere einer Turbomaschine eines Luftfahrzeugs, das für den Einsatz einer Verbrennung bei konstantem Volumen konfiguriert ist, umfassend mindestens zwei Brennkammern (12A, 12B), wobei jede Kammer (12A, 12B, 12C) einen Einlassanschluss (16) für komprimiertes Gas und einen Auslassanschluss (18) für Verbrennungsgas umfasst, und ein Zündmittel, das eine Verbrennung in den Brennkammern (12A, 12B, 12C) auslöst,
wobei die Kammern (12A, 12B, 12C) um eine Achse (A) herum angeordnet sind, wobei das Modul (10) mindestens eine Leitung (80) umfasst, die dazu angepasst ist, eine erste der Brennkammern (12A) mit mindestens einer zweiten der Brennkammern (12B) in Verbindung zu setzen, um aus der ersten Brennkammer stammende Verbrennungsgase (12A) in die zweite Brennkammer (12B) einzuspeisen, um eine Verbrennung in der zweiten Brennkammer (12B) auszulösen,
wobei das Modul einen Verschluss (30, 82) für die Öffnung/ die Schließung der Leitung (80) umfasst, der dazu angepasst ist, den Durchgang der Verbrennungsgase von der ersten Brennkammer (12A) zur zweiten Brennkammer (12B) selektiv zuzulassen, wobei das Verbrennungsmodul der Turbomaschine **dadurch gekennzeichnet ist, dass** es weiter jeweilige gemeinsame Einlass- (28) / Auslass- (30) ventile umfasst, die synchronisiert und drehend um die Achse (A) herum montiert sind, um den Einlass- (16) / Auslass- (18) anschluss der Verbrennungskammern (12A, 12B, 12C) zu öffnen und zu schließen, wobei die Ventile (28, 30) mit einer radialen Öffnung (36, 38) zusammenwirken, die in einer zur Achse (A) gerichteten, zylinderabschnittförmigen Wand (32) der Verbrennungskammer (12) gebildet ist, wobei jedes entsprechende Einlass- (28) oder Auslass- (30) drehventil ein rohrförmiges Element (40, 42) mit einem Durchmesser entsprechend dem Zylinderabschnitt umfasst, das koaxial drehend um den Zylinderabschnitt herum montiert ist, wobei das rohrförmige Element (40, 42) eine Bohrung (44, 46) umfasst, die das Befördern der Einlass-/Auslassgase erlaubt, und mindestens eine radiale Aussparung (50, 52), die im Wesentlichen in einer axialen Ebene der radialen Öffnung (36, 38) des Anschlusses (16, 18) eingerichtet ist und die dazu angepasst ist, die radiale Öffnung (36, 38) bei der Drehung des rohrförmigen Elements (40, 42) zu verschließen oder freizugeben, und dadurch, dass mindestens eines der Drehventile (30) an seinem Umfang einen Ausnehmungsabschnitt (92) umfasst, der sich über einen bestimmten Winkelteilabschnitt des Umfangs des Drehventils (30) erstreckt, um die erste Leitung (80) zu bilden, die dazu vorgesehen ist, eine erste der Brennkammern (12A, 12B, 12C) und eine zur ersten Brennkammer (12A, 12B, 12C) benachbarte, zweite der Brennkammern (12B, 12C, 12A) in Verbindung zu setzen, wobei in einer Winkelposition des Drehventils (30), die einem Abschluss der Verbrennung in der ersten Kammer (12A, 12B, 12C) vor einem Ablassen der Verbrennungsgase und einem Abschluss der Befüllung der zweiten Kammer (12B, 12C, 12A) vor der Verbrennung entspricht, das Drehventil (30) in Abhängigkeit von seiner Winkelposition den Verschluss (30, 82) bildet.

2. Verbrennungsmodul (10) nach dem vorstehenden Anspruch, **dadurch gekennzeichnet, dass** der Ausnehmungsabschnitt (92) am Umfang des rohrförmigen Elements (42) des Auslassdrehventils (30) gebildet ist.

3. Verbrennungsmodul (10) nach Anspruch 1 oder 2, **dadurch gekennzeichnet, dass** es ein gemeinsames Drehelement (66) umfasst, das die Einlass- (28) / Auslass- (30) drehventile umfasst, die gegenseitig drehbeweglich verbunden sind.

4. Turbomaschine (10), umfassend ein Kompressormodul (20), das mindestens einen Kompressor (22) umfasst, ein Verbrennungsmodul (10) nach einem der Ansprüche 1 bis 3 und ein Turbinenmodul (24), das mindestens eine Turbine (26) umfasst, wobei das Kompressormodul (20) über ein Wellensystem (72) mit dem Turbinenmodul (24) verbunden ist, **dadurch gekennzeichnet, dass** das Kompressormodul (20) das Verbrennungsmodul (10) mittels einer einzigen Einlassleitung versorgt und dadurch, dass das Verbrennungsmodul (10) das Turbinenmodul (24) mittels einer einzigen Auslassleitung versorgt.

5. Turbomaschine (10) nach dem vorstehenden Anspruch, wobei das Verbrennungsmodul wie in Anspruch 3 definiert ist, **dadurch gekennzeichnet, dass** mindestens eine Welle des Wellensystems (72) ein Antriebsmittel des gemeinsamen Drehelements (66) bildet, das die Einlass- (28) / Auslass- (30) drehventile gegenseitig drehbeweglich verbindet.

6. Verfahren zum Steuern eines Verbrennungsmoduls einer Turbomaschine nach einem der Ansprüche 4 oder 5, umfassend mindestens einen Schritt des sukzessiven Zündens mindestens einer ersten und einer zweiten Brennkammer (12A, 12B), die jeweils sukzessiv gemäß einem Zyklus arbeiten, der umfasst:
- eine erste Phase, in deren Verlauf der Einlass- (16) und der Auslassanschluss geschlossen sind, umfassend eine erste Teilphase des Eingrenzens eines frischen karburierten Gemischs, dann eine zweite Teilphase der Verbrennung des karburierten Gemischs in jeder entsprechenden Kammer (12A, 12B),
- eine zweite Phase, in deren Verlauf der Einlassanschluss (16) geschlossen ist und der Auslassanschluss (18) geöffnet ist, um den Auslass der Verbrennungsgase aus jeder entsprechenden Kammer (16, 18) herbeizuführen, dann
- eine dritte Phase, in deren Verlauf der Einlass- (16, 18) und der Auslassanschluss geöffnet sind, um die Spülung der Verbrennungsgase mit den frischen Gasen durch jede entsprechende Kammer (12A, 12B) hinweg herbeizuführen,
wobei der Einlass und der Auslass aus der ersten Kammer (12A) und der zweiten Kammer (12B) im Verlauf des Schritts des sukzessiven Zündens derart verschoben werden, dass die erste Kammer (12A) der zweiten Teilphase unterzogen werden kann, wenn die zweite Kammer (12B) der ersten Teilphase unterzogen wird, und wobei der Schritt des sukzessiven Zündens einen Teilschritt der Steuerung umfasst, der eingrifft, wenn die erste Kammer (12A) der zweiten Teilphase unterzogen wird, in dessen Verlauf die erste Kammer (12A) und die zweite Kammer (12B) in Verbindung gesetzt werden, um die Verbrennung in der zweiten Kammer (12B) auszulösen.

## Claims

1. Turbine engine combustion module (10), in particular aircraft turbine engine combustion module, configured for the implementation of a constant-volume combustion, comprising at least two combustion chambers (12A, 12B), each chamber (12A, 12B, 12C) comprising a compressed gas inlet port (16) and a flue gas exhaust port (18), and an ignition means triggering a combustion in the combustion chambers (12A, 12B, 12C),
the chambers (12A, 12B, 12C) being arranged about an axis (A), the module (10) comprising at least one conduit (80) capable of connecting a first of the combustion chambers (12A) with at least one second of the combustion chambers (12B) to inject flue gases coming from the first combustion chamber (12A) in said second combustion chamber (12B) in order to trigger a combustion in said second combustion chamber (12B),
the module comprising a shutter (30, 82) for the opening/closing of the conduit (80) capable of selectively enabling the passage of flue gases from the first combustion chamber (12A), to said second combustion chamber (12B), said turbine engine combustion module being **characterised in that** it further comprises respective common inlet (28)/exhaust (30) valves, synchronised and mounted rotarily about said axis (A) to open and close the inlet (16)/exhaust (18) ports of the combustion chambers (12A, 12B, 12C), said valves (28, 30) cooperating with a radial opening (36, 38) which is formed in a wall (32) shaped in a cylindrical section of the combustion chamber (12) turned towards the axis (A), each corresponding inlet (28) or exhaust (30) rotary valve comprising a tubular element (40, 42), of diameter corresponding to said cylindrical section mounted coaxially rotating to said cylindrical section, said tubular element (40, 42) comprising a bore (44, 46) enabling the flow of inlet/exhaust gases, and at least one radial aperture (50, 52), arranged substantially in an axial plane of the radial opening (36, 38) of said port (16, 18), and which is capable of closing or releasing said radial opening (36, 38) during the rotation of said tubular element (40, 42) and **in that** at least one of the rotary valves (30) comprises, on its periphery, a groove section (92) which extends over an angular sector determined from the periphery of the rotary valve (30) to form said conduit (80) intended to connect a first of the combustion chambers (12A, 12B, 12C) and a second of the adjoining combustion chambers (12B, 12C, 12A) of said first chamber (12A, 12B, 12C), in an angular position of said rotary valve (30) corresponding to a end of combustion in the first chamber (12A; 12B, 12C) prior to a discharge of the flue gases and an end-of-fill of the second chamber (12B, 12C, 12A) prior to the combustion, the rotary valve (30) forming the shutter (30, 82) according to its angular position.

2. Combustion module (10) according to the preceding claim, **characterised in that** the groove section (92) is formed in the periphery of the tubular element (42) of the rotary exhaust valve (30).

3. Combustion module (10) according to claim 1 or 2, **characterised in that** it comprises a common rotary element (66) which comprises rotary inlet (28)/exhaust (30) valves mutually connected in rotation.

4. Turbine engine (10) comprising a compressor module (20) comprising at least one compressor (22), a combustion module (10) according to one of claims 1 to 3, and a turbine module (24) comprising at least one turbine (26), the compressor module (20) being connected to the turbine module (24) by a shaft system (72), **characterised in that** the compressor module (20) supplies the combustion module (10) by way of one single inlet conduit and **in that** the combustion module (10) supplies the turbine module (24) by way of one single exhaust conduit.

5. Turbine engine (10) according to the preceding claim, the combustion module being such as defined in claim 3, **characterised in that** at least one shaft of the shaft system (72) forms a means for driving the common rotary element (66) connecting the rotary inlet (28)/exhaust (30) valves mutually in rotation.

6. Method for controlling a combustion module of a turbine engine according to claims 4 or 5, comprising at least one successive ignition step of at least one first and one second combustion chambers (12A, 12B) which each operate successively according to a cycle comprising:
- a first phase during which the inlet (16) and exhaust ports are closed, comprising a first sub-phase for confining a fresh carburetted mixture, then a second sub-phase of combusting said carburetted mixture in each corresponding chamber (12A, 12B),
- a second phase during which the inlet port (16) is closed and the exhaust port (18) is open, to cause the exhaust of the flue gases from each corresponding chamber (16, 18), then
- a third phase during which the inlet and exhaust ports (16, 18) are open, to cause the flushing of the flue gases with fresh gases through each corresponding chamber (12A, 12B),
wherein, during the successive ignition step, the inlet and the exhaust from the first chamber (12A) and second chamber (12B) are phase-shifted, such that the first chamber (12A) can be subjected to the second sub-phase when the second chamber (12B) is subjected to the first sub-phase, and wherein the successive ignition step comprises a control sub-step, intervening when the first chamber (12A) is subjected to the second sub-phase, during which the first chamber (12A) and the second chamber (12B) are connected to trigger the combustion in the second chamber (12B).
